# EUROPÄISCHE PATENTANMELDUNG

(11) **EP 1 731 306 A1**
(43) Veröffentlichungstag der Anmeldung: **13.12.2006**
(21) Anmeldenummer: 05012128.4
(22) Anmeldetag: 06.06.2005
(51) Int. Cl.: B32B 37/12, C09J 7/04

(54) **Düsenauftragsverfahren zum Beschichten und Kaschieren von Warenbahnen**

(71) Anmelder: Krögel Gmbh & Co. KG, 46399 Bocholt (DE)
(72) Erfinder: Simon, Klaus-Peter, 40589 Düsseldorf (DE); Eisele, Michael, 46397 Bocholt (DE)
(74) Vertreter: HOFFMANN EITLE

(57) **Zusammenfassung**

Ein Verfahren zum flächigen Auftrag von Bindemittel auf eine Warenbahn, bevorzugt auf Textilbasis, wobei der Auftrag mittels Düse kontaktfrei und punktgenau durchgeführt wird. Es lassen sich somit substrat-unabhängig glatt- und rauflorige Warenbahnen mit genau definierten Bindemittelmengen und Auftragsgeometrien beschichten und kaschieren.

## Beschreibung

### Gebiet der Erfindung

Die vorliegende Erfindung bezieht sich auf ein Verfahren zum Beschichten und Kaschieren von Warenbahnen, insbesondere zum Auftragen von Bindemitteln auf Warenbahnen in definierter Menge und Geometrie.

### Stand der Technik

Warenbahnen verschiedenster Art, etwa solche auf Textilbasis wie zum Beispiel Gewebe, Gewirke, Gestricke, Nadel- /Polvliesbeläge, Tuftings, aber auch Papier, Folien usw. werden in großem Umfang mit Bindemitteln beaufschlagt. Hierbei werden als Bindemittel beispielsweise Plastisole, Organosole oder Klebstoffe verwendet, welche in Form von Pasten, Dispersionen, Schmelzen oder Pulvern aufgebracht werden können. Deren Basis sind zumeist Kunststoffe, d.h. Thermoplaste, Elastomere, thermoplastische Elastomere und - nach chemischer Reaktion - vernetzte Elastomere sowie Duromere. Ziel des Bindemittelauftrags ist es, eine Schicht oder eine verfestigende Matrix auf einer Warenbahn zu bilden oder - im Falle von Klebstoffen - als Kaschierhilfsmittel zur dauerhaften Verbindung mit einer gleichen oder andersartigen Warenbahn zu fungieren.

Im Laufe der Zeit hat sich eine große Anzahl verschiedener Verfahren bzw. Aggregate herausgebildet, die zunächst von der vielfältigen Natur der verschiedenen Warenbahnen, die beaufschlagt werden sollen, sowie von der Art der möglichen Binde- bzw. Beschichtungsmittel bestimmt werden. Deren Wirkungen sind voneinander abhängig und werden schließlich von den speziellen Eigenschaftsmerkmalen und -werten, die vom jeweiligen Fertigprodukt erwartet werden, abgeleitet. Die Auswahl einer Variante war also bisher in diesem Kontext zu treffen.

Bei der Verfahrenstechnik des Bindemittelauftrags unterscheidet man direkte oder indirekte (kontaktfreie) Verfahren, wobei deren wesentlicher Unterschied darin besteht, dass bei direkten Verfahren zumindest ein Teil des Auftragsaggregats mit der Warenbahn in Berührung kommt, während die indirekten Verfahren ohne Kontakt mit der Warenbahn arbeiten. Beide Verfahren ermöglichen sowohl vollflächige wie auch partielle Beschichtungen. Als Beispiele für direkte Verfahren/Auftragsaggregate wäre das Laminieren mit Gravurwalzen zu nennen, bei dem das Bindemittel über ein Rakel in die Vertiefungen der Gravurwalze übertragen und dann von dieser auf die Oberfläche der Warenbahn gepresst wird. Weitere Beispiele sind Streichen/Rakel, Beschichten/Reverse Roll Coater, Laminieren/Schlitzdüse bzw. Screenauftrag, Imprägnieren/Foulard und Pasten-Pulverpunkt/Lochsiebrakel. Als indirekte Verfahren/Auftragsaggregate sind zum Beispiel Sprühen/Spritzkopf oder Pulverauftrag/Pulverwalze bekannt. Hier wird berührungslos das Bindemittel auf die Warenbahn aufgesprüht oder aufgepudert.

Direkte Verfahren eignen sich aufgrund des Kontakts mit dem Substrat meist nur für glattflorige, porenarme Warenbahnen, sind also nicht substrat-unabhängig. Zwar sind diese Verfahren in der Lage, Bindemittel punktgenau aufzutragen, jedoch kann dies nur in einer bestimmten Punktgröße bzw. einem bestimmten Auftragsmuster geschehen, was am Beispiel der Gravurwalze offensichtlich wird. Eine Änderung der Punktgröße oder des Auftragsmusters erfordert ein zeitaufwändiges und kompliziertes Auswechseln der Walze. Auch ist die Reinigung direkter Aggregate aufwändig. Werden direkte Verfahren auf rauflorige Substrate angewandt, bedingt der Kontakt mit dem Substrat eine wesentliche Veränderung des Substrats in Form einer Versteifung, Kompression und/oder Änderung der Porenzahl und des Porenvolumens, sowie des "Griffs" der Substratoberfläche (des Flors). Zudem ist aufgrund der kostenintensiven Auftragsvorrichtungen nur eine eingeschränkte Arbeitsbreite erreichbar.

Indirekte oder kontaktfreie Verfahren sind wegen der Vermeidung der Berührung mit dem Substrat besser für rauflorige Warenbahnen geeignet, jedoch ist mit bisherigen Verfahren lediglich ein undefiniertes flächiges Auftragsmuster möglich, das schlecht reproduzierbar und nur ungenau dosierbar ist. Als Beispiel sei hier der "Sprühnebel" und die daraus resultierende Wolkigkeit zu nennen. Ein punktgenauer Auftrag ist nicht möglich. Zudem ist auch hier aufgrund der schlechten Dosierbarkeit beim linearen bzw. flächigen Auftrag mit einer nicht zu vernachlässigenden Veränderung der Porenzahl und des Porenvolumens, sowie mit einer Versteifung zu rechnen.

### Darstellung der Erfindung

Aufgabe der vorliegenden Erfindung ist es, ein Verfahren zu entwickeln, welches es ermöglicht, Bindemittel substrat-unabhängig und in genau dosierbarer Menge und Geometrie auf Warenbahnen flächig aufzubringen.

Diese Aufgabe wird durch ein Auftragsverfahren gelöst, welches Bindemittel kontaktfrei und punktgenau mittels Düsenauftrag auf eine Warenbahn aufträgt. "Kontaktfrei" bedeutet in diesem Zusammenhang, dass zu keinem Zeitpunkt des Auftragens ein Kontakt, auch nicht über das ausgestoßene Bindemittel, zwischen der Oberfläche der Warenbahn und dem Auftragswerkzeug besteht. Das heißt, dass das vom Auftragswerkzeug abgegebene Bindemittel (als Tropfen) lediglich aufgrund seiner Schwerkraft und Geschwindigkeit Druck auf die Oberfläche der Warenbahn ausübt. Unter dem Begriff "punktgenau" ist zu verstehen, dass der Auftrag an genau vorbestimmter und reproduzierbarer Stelle der Warenbahn punktförmig, d.h. mit genau definierten Grenzen der aufgetragenen Menge Bindemittel erfolgen kann. Ebenso beinhaltet der Begriff, dass gezielt und kontrolliert einzelne Bindemitteltropfen aus der Düse ausgestoßen werden können, womit sich das vorliegende Verfahren auch wesentlich von den in der Einleitung genannten Sprühverfahren, die Bindemittel unter Einsatz eines mithin düsenartigen Sprühkopfes auftragen, unterscheidet. Der kontaktfreie Auftrag ermöglicht es, die Eigenschaften (Weichheit, Porenzahl, -volumen) von sowohl glattflorigen als auch rauflorigen Substratoberflächen im Wesentlichen unverändert beizubehalten, während aufgrund des punktgenauen Düsenauftrags gleichzeitig die erwünschte Bindewirkung mit genau definierter Geometrie des Haftbereichs erreicht wird.

Vorteilhafterweise wird die Dauer des Düsenauftrags steuerungstechnisch durchgeführt, zum Beispiel durch pneumatische oder elektromechanische Steuerungen, um die aufgetragene Menge des Bindemittels und die Punktgeometrie zu definieren.

Besonders bevorzugt wird die Dauer des Düsenauftrags piezoelektrisch gesteuert, so dass ein genau dosierbarer und somit minimaler Bindemittelverbrauch gewährleistet wird. Die exakte Dosierung erlaubt somit auch eine genau definierte Punktgröße ohne das Auftragswerkzeug wechseln zu müssen. Zudem erlaubt die piezoelektrische Steuerung eine nahezu unbegrenzte Anzahl von Lastwechselvorgängen und somit lange Lebensdauern der Düsen. Die piezoelektrische Steuerung wird mittels eines Piezoelements (Piezo-Keramik) durchgeführt, d.h. mittels eines Kristalls, in welchem infolge einer angelegten elektrischen Spannung eine mechanische Spannung auftritt und so sein Volumen verändert. Das Piezoelement kann daher zur Bewegung von Bauteilen, unter Umständen mittels Übersetzungen, verwendet werden.

Der Düsenauftrag kann bevorzugt auch so gesteuert werden, dass der Bindemittelauftrag in Linienform erfolgt, so dass gezielt versteifte, lineare Bereiche auf dem Substrat gebildet werden können.

Weiter ist bevorzugt auch ein sequentieller, flächiger und iterativer Düsenauftrag möglich. Somit lassen sich Auftragsmuster wie Streifen, Balken und andere Figuren flächig erzeugen.

Bevorzugt erfolgt der Bindemittelauftrag senkrecht zur Längs- und Querrichtung der Warenbahn im Auftragspunkt, kann jedoch auch unter einem Winkel von der Senkrechten durchgeführt werden. Dadurch lässt sich das Verfahren in verschiedenen räumlichen Gegebenheiten zwischen Auftragswerkzeug und Warenbahn einsetzen.

Vorzugsweise wird das Verfahren mit einem polymerischen oder Kunststoff-Bindemittel durchgeführt. Dies ermöglicht die rasche und problemlose Reinigung des Auftragswerkzeugs.

Nach einer bevorzugten Ausführungsform ist das im Verfahren eingesetzte Bindemittel ein thermoplastischer Klebstoff, so dass dessen Viskosität und Fließeigenschaften gezielt durch Einstellen der Klebstofftemperatur gesteuert werden können.

In einer besonders bevorzugten Ausführungsform wird der Düsenauftrag mittels mehrerer, in Breite und Länge nebeneinander angeordneter Düsen durchgeführt. Dadurch können Warenbahnen großer Breite flächig und mit den oben genannten Vorteilen mit Bindemittel beschichtet werden.

Zudem ist es vorteilhaft, das Düsenauftragsverfahren durch Beschickung verschiedener Düsen mit verschiedenen Bindemitteln durchzuführen. So können in verschiedenen Bereichen der Warenbahn unterschiedliche Hafteigenschaften und Florbeschaffenheiten realisiert werden.

Schließlich ist es besonders bevorzugt, das Verfahren auf eine Warenbahn auf Textilbasis anzuwenden.

Zur Durchführung des erfindungsgemäßen Verfahrens wurde ein Düsenauftragssystem entwickelt, welches mindestens eine Auftragsdüse umfasst, die ein Bindemittel kontaktfrei und punktgenau auf eine Warenbahn auftragen kann. Die Düse ist hierbei über eine Zuleitung mit einer regelbaren Pumpe verbindbar, welche das Bindemittel zur Düse befördert. Somit können sowohl glatt- als auch rauflorige Warenbahnen ohne wesentliche Beeinträchtigung der Flor-Eigenschaften mit Bindemittel beschichtet werden, wobei gleichzeitig die vom Bindemittel erzeugte Haftschicht in definierter Geometrie erhalten werden kann.

Bevorzugt umfasst das Düsenauftragssystem einen Öffnungs- und Schließmechanismus, mithilfe dessen die Öffnungsdauer der Düse gesteuert werden kann. Der Öffnungs- und Schließmechanismus trennt dabei die Düse von der Bindemittel-Zuleitung. Auf diese Weise ist eine Kontrolle der von der Düse ausgestoßenen Bindemittelmenge möglich.

Vorteilhafterweise wird der Öffnungs- und Schließmechanismus von einem piezoelektrischen Element, gegebenenfalls mittels Übersetzungen betätigt. Hierdurch ist eine extrem genaue Dosierung des Bindemittels realisierbar. Die Betätigung kann jedoch auch mittels pneumatischer oder elektromechanischer Vorrichtungen, z.B. über einen Solenoid betätigt werden.

Besonders bevorzugt besteht der Öffnungs- und Schließmechanismus aus einer die Düse öffnenden und verschließenden Nadel.

In einer bevorzugten Ausführungsform umfasst das Auftragssystem eine Vielzahl von Düsen, die kammartig neben- und/oder hintereinander angeordnet sind. Ein flächiger Auftrag des Bindemittels auf Warenbahnen verschiedener Breite ist dadurch mit den eingangs genannten Vorteilen realisierbar.

In einer weiteren bevorzugten Ausführungsform sind die Düsen einzeln ansteuerbar. Dies ermöglicht es, auf einfache Weise komplexe Punkt- oder Linienauftragsmuster herzustellen.

Vorzugsweise steht die Düse mit Ihrer Längsachse senkrecht zur Längs- und Querrichtung der Warenbahn, kann jedoch in einer anderen Ausführungsform auch unter einem Winkel zur Senkrechten angeordnet sein. Diese Variabilität der Anordnung ermöglicht es, das Düsenauftragssystems verschiedenen räumlichen Gegebenheiten anzupassen.

### Kurze Beschreibung der Zeichnungen

Im folgenden wird die Erfindung anhand eines Ausführungsbeispiels gemäß den Figuren 1 bis 3 erläutert.

Figur 1 zeigt im Querschnitt zwei Textilwarenbahnen, die durch punktgenauen und kontaktlosen Bindemittelauftrag miteinander verbunden wurden.

Figur 2 zeigt im Querschnitt zwei Textilwarenbahnen, die durch ein herkömmliches indirektes Sprühauftragsverfahren verbunden wurden.

Figur 3 zeigt schematisch eine der im erfindungsgemäßen Verfahren eingesetzten Auftragsdüsen.

### Wege zur Ausführung der Erfindung

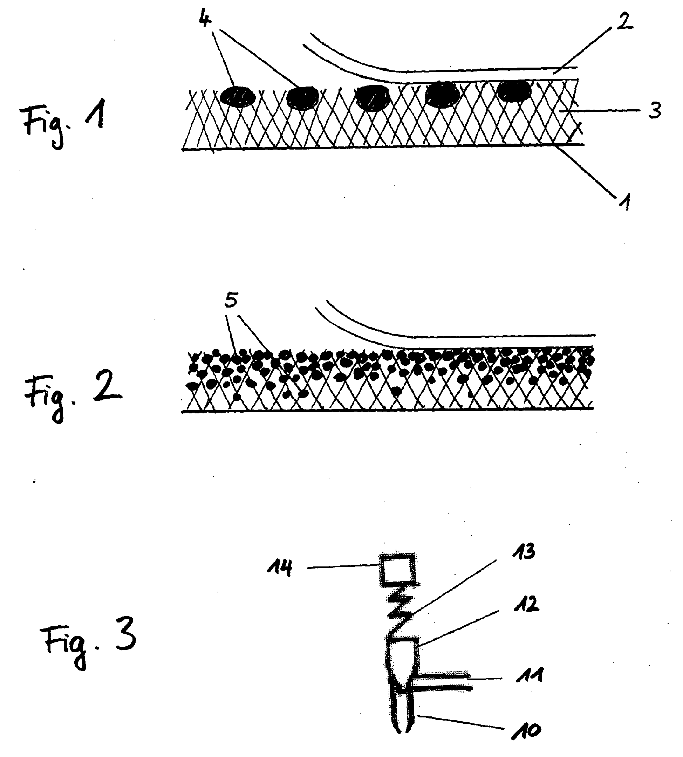

Im vorliegenden Ausführungsbeispiel dient ein Schmelzklebstoff als Bindemittel, das mittels Düsenauftrag auf eine erste Warenbahn 1 aufgetragen wird, welche dann mit einer zweiten Warenbahn 2 als Kaschiergewebe verbunden wird. Wie in Fig. 1 dargestellt, weist die erste Warenbahn ein gerautes Flor 3 (wie z.B. bei einem gerauten Baumwollgewebe) auf. Der Rauflor dient als Distanzhalter zwischen den Warenbahnen, aber auch als Griffelement und Porenbildner. Durch das erfindungsgemäße Düsenauftragsverfahren werden nun gezielt und dosiert Klebstoffpunkte 4 auf die erste Warenbahn aufgetragen, so dass die genannten Eigenschaften des Flors hierbei wesentlich erhalten bleiben und nur geringfügig verändert werden. Zugleich ist der Klebstoffauftrag vollständig reproduzierbar.

Bei einem direkten Auftragsverfahren z.B. mit einer Gravurwalze würden hingegen sowohl das Flor komprimiert, als auch dessen Griff und Poreneigenschaften stark verändert. Ebenso würden dieselben unerwünschten Effekte bei einem indirekten Auftragsverfahren, wie in Fig. 2 dargestellt, auftreten. Hier wurde der Klebstoffauftrag kontaktlos durch Besprühen oder Bepudern durchgeführt. Die Klebstofftröpfchen bzw. -partikel 5 bedecken aufgrund der Dispergierung die Oberfläche des Flors, dringen in die Poren ein und verändern dadurch grundlegend die Eigenschaften des Flors. Versteifung, Porenverschluss und Veränderung des Griffs sind die Folge.

Fig. 3 zeigt eine schematische Darstellung einer Düse 10, mit der das erfindungsgemäße Düsenauftragsverfahren realisiert werden kann. Die Düse ist über eine Zuleitung 11 an eine Druckpumpe (nicht gezeigt) angeschlossen, welche die Düse mit Klebstoff unter vorgegebenem Druck versorgt. Die Düse wird mit Hilfe einer Nadel 12 geöffnet und geschlossen. Der Öffnungsmechanismus wird über eine Feder 13 von einem piezoelektrischen Einkristall 14 betätigt. Die Nadel kann zudem in ihrer Position (Eindringtiefe) in der Klebstoff-Eintrittsöffnung der Düse sowie in ihrer Öffnungsdauer gesteuert werden, so dass der Ausstoß einer vorgegebenen Menge von Klebstoff erreicht wird. Zudem kann im Falle eines Schmelzklebstoffs (z.B. eines thermoplastischen Elastomers) dessen Temperatur als zusätzlicher Parameter variiert werden und so die Eigenschaften (Schmelzviskosität, Schmelzindex, Schubmodul) nach Wunsch beeinflusst werden.

In der Regel werden eine Vielzahl solcher Düsen, deren Nadeln jeweils einzeln ansteuerbar sind, in einer Kammanordnung nebeneinander eingesetzt, um Textilbahnen bis zu 5200 mm Breite beschichten bzw. kaschieren zu können. Zudem können die Düsen auch einzeln mit unterschiedlichen Klebstoffen beschickt werden.

## Patentansprüche

1. Verfahren zum flächigen Auftrag von Bindemittel auf eine Warenbahn, **dadurch gekennzeichnet, dass** der Auftrag mittels Düse kontaktfrei und punktgenau durchgeführt wird.

2. Verfahren nach Anspruch 1, **dadurch gekennzeichnet, dass** die Dauer des Düsenauftrags steuerungstechnisch realisiert wird.

3. Verfahren nach Anspruch 2, **dadurch gekennzeichnet, dass** die Dauer des Düsenauftrags piezoelektrisch gesteuert wird.

4. Verfahren nach Anspruch 1, 2 oder 3, **dadurch gekennzeichnet, dass** der Düsenauftrag so gesteuert wird, dass der Bindemittelauftrag in Punktform erfolgt.

5. Verfahren nach Anspruch 1, 2 oder 3, **dadurch gekennzeichnet, dass** der Düsenauftrag so gesteuert wird, dass der Bindemittelauftrag in Linienform erfolgt.

6. Verfahren nach Anspruch 1, 2 oder 3, **dadurch gekennzeichnet, dass** der Düsenauftrag so gesteuert wird, dass der Bindemittelauftrag sequentiell, flächig und iterativ erfolgt.

7. Verfahren nach einem der vorangehenden Ansprüche, **dadurch gekennzeichnet, dass** der Bindemittelauftrag senkrecht zur Längs- und Querrichtung der Warenbahn oder unter einem Winkel zur Senkrechten durchgeführt wird.

8. Verfahren nach einem der vorangehenden Ansprüche, **dadurch gekennzeichnet, dass** das Bindemittel ein polymerisches oder Kunststoff-Bindemittel ist.

9. Verfahren nach einem der vorangehenden Ansprüche, **dadurch gekennzeichnet, dass** das eingesetzte Bindemittel ein thermoplastischer Klebstoff ist.

10. Verfahren nach einem der vorangehenden Ansprüche, **dadurch gekennzeichnet, dass** der Düsenauftrag mittels mehrerer, in Länge und Breite nebeneinander angeordneter Düsen erfolgt.

11. Verfahren nach Anspruch 10, **dadurch gekennzeichnet, dass** der Düsenauftrag durch Beschickung verschiedener Düsen mit verschiedenen Bindemitteln durchgeführt wird.

12. Verfahren nach einem der vorangehenden Ansprüche, **dadurch gekennzeichnet, dass** die Warenbahn eine Warenbahn auf Textilbasis ist.

13. Verfahren nach einem der Ansprüche 1 bis 12, **dadurch gekennzeichnet, dass** die Warenbahn Papier, Polymerfolie oder Metallfolie ist.
